# EUROPÄISCHE PATENTSCHRIFT

(11) **EP 2 538 520 B1**
(45) Veröffentlichungstag und Bekanntmachung des Hinweises auf die Patenterteilung: **20.04.2016**
(21) Anmeldenummer: 12004622.2
(22) Anmeldetag: 20.06.2012
(51) Int. Cl.: H02J 7/00

(54) **Batteriespeicherwerk**
Battery storage device
Centrale de stockage de batterie

(30) Priorität: 20.06.2011 DE 102011105417
(43) Veröffentlichungstag der Anmeldung: 26.12.2012
(73) Patentinhaber: Metroplan Process Management GmbH, 22089 Hamburg (DE)
(72) Erfinder: Mielke Thomas, 22397 Hamburg (DE)
(74) Vertreter: Hauck Patentanwaltspartnerschaft mbB

(56) Entgegenhaltungen:
- WO-A2-2011/007329
- US-A1- 2007 285 060

## Beschreibung

Die Erfindung betrifft ein Batteriespeicherwerk mit einem Batteriespeicher, der eine Vielzahl von Batterien aufweist, und einer Einrichtung zum Bereitstellen von Regelleistung für ein elektrisches Versorgungsnetz aus dem Batteriespeicher, die einen Umrichter aufweist.

In Deutschland sind für die Organisation des Verbundsystems aus mehreren unterschiedlichen elektrischen Versorgungsnetzen die sogenannten Übertragungsnetzbetreiber (ÜNB) verantwortlich. Diese Verantwortung umfasst einerseits den sicheren und zuverlässigen Betrieb des jeweiligen Versorgungsnetzes in der betreffenden Regelzone und andererseits die Verbindungen mit anderen Versorgungsnetzen. Die zentrale Aufgabe ist die Frequenzhaltung und die Einhaltung der Leistungsbilanz. Hierfür muss zu jedem Zeitpunkt die in das jeweilige Versorgungsnetz eingespeiste elektrische Leistung mit der entnommenen elektrischen Leistung in Einklang gebracht werden. Zur Erfüllung diese Aufgabe benötigen die Übertragungsnetzbetreiber Regelleistung. Sie sind gesetzlich-zur ausreichenden Vorhaltung von Regelleistung in Form von Primär-, Sekundär- und Minutenreserveleistung verpflichtet. Die deutschen Übertragungsnetzbetreiber schreiben diese Regelleistungen im liberalisierten Strommarkt nach gemeinsamen Grundsätzen aus und beschaffen sie zu Wettbewerbskonditionen, d.h. zu marktbestimmten Preisen über eine gemeinsame Internetplattform. Um an diesem Markt teilnehmen zu können, müssen die Anbieter von Regelleistungen detailliert festgelegte technische und organisatorische Mindestanforderungen erfüllen und im Rahmen einer Präqualifikation entsprechende Nachweise erbringen. Für die deutschen Übertragungsnetze, die ein integraler Bestandteil des UCTE-Verbundnetzes sind, sind insbesondere die im "UCTE: Operation Handbook, Policy 1 Load-Frequency Control and Performance" vom 19. März 2009 festgehaltenen Regeln zu beachten.

Die festgelegten Anforderungen können grundsätzlich mit unterschiedlichen Kraftwerkstypen erfüllt werden, beispielsweise mit Gasturbinenkraftwerken oder Pumpspeicherkraftwerken. Ein Beitrag zur Regelleistung kann auch von Stromkunden mit Laststeuerung geleistet werden, die kurzfristig vom Netz getrennt werden können.

Ebenfalls bekannt sind Batteriespeicherwerke der eingangs genannten Art. Ein Beispiel ist aus der Firmenbroschüre mit dem Titel "SVC Light with Energy Storage" des Anbieters ABB bekannt. Das bekannte Batteriespeicherwerk verwendet eine Vielzahl speziell angefertigter Lithium-Ionen-Batteriemodule.

Druckschrift US 2007/285060 A1 beschreibt ein Kraftfahrzeug mit Hybridantrieb. Dieses weist einen Verbrennungsmotor und zwei auch als Generatoren betreibbare Elektromotoren auf. Die Elektromotoren sind mit einer elektrischen Speichereinrichtung verbunden, die Batterien enthält. Zustandsgrößen der gesamten elektrischen Speichereinrichtung werden von einem Batterieüberwachungsmodul erfasst.

Druckschrift WO 2011/007329 A2 beschreibt ein elektrisches Antriebssystem für ein Fahrrad. Lithium-Ionen-Batterien sind zu zwei Batteriemodulen zusammengefasst. Die Batteriemodule treiben einen Elektromotor an oder werden über einen Gleichspannungswandler aus einer Brennstoffzelle aufgeladen.

Davon ausgehend ist es die Aufgabe der Erfindung, ein Batteriespeichcrwerk mit einem Batteriespeicher und einer Einrichtung zum Bereitstellen von Regelleistung sowie ein Verfahren zum Bereitstellen von Regelenergie zur Verfügung zu stellen, das einfach und wirtschaftlich an wechselnde Anforderungen angepasst werden kann.

Diese Aufgabe wird gelöst durch das Batteriespeichcrwerk mit den Merkmalen des Anspruchs 1. Vorteilhafte Ausgestaltungen sind in den sich anschließenden Unteransprüchen angegeben.

Das Batteriespeichcrwerk hat einen Batteriespeicher, der eine Vielzahl von Batterien aufweist, und eine Einrichtung zum Bereitstellen von Regelleistung für ein elektrisches Versorgungsnetz aus dem Batteriespeicher, die einen Umrichter aufweist, wobei die Batterien Industriebatterien sind und eine Steuerung vorhanden ist, die dazu ausgebildet ist, für eine der Industriebatterien oder für eine Gruppe der Industriebatterien die Lade- und Entladeströme beim Bereitstellen der Regelleistung individuell zu steuern und eine Information über die verbleibende Lebensdauer zu speichern.

Bei der Erfindung handelt es sich bei den verwendeten Batterien um Industriebatterien, d.h. im Gegensatz zu dem eingangs erläuterten Stand der Technik nicht um Spezialanfertigungen für die Verwendung in dem Batteriespeicherwerk, sondern um herkömmliche, wiederaufladbare Batterien für industrielle Zwecke. Mit dem Begriff "Industriebatteien" ist gemeint, dass die Batterien insbesondere hinsichtlich ihrer elektrischen Eigenschaften, aber unter Umständen auch hinsichtlich ihrer Bauform und sonstigen mechanischen Eigenschaften einem Industriestandard entsprechen. Die entsprechend diesem Industriestandard vorgesehene Verwendung der Industriebatterien unterscheidet sich von der erfindungsgemäß vorgesehenen Verwendung für ein Batteriespeicherwerk. Eine Industriebatterie umfasst in der Regel mehrere Zellen und weist eine definierte Nennspannung von beispielsweise 12, 24, 36, 48, 72 oder 80 Volt auf. Die Zellen sind in einem Gehäuse zu der Industriebatterie zusammengefasst. Eine Gruppe von Industriebatterien umfasst mehrere Industriebatterien, beispielsweise 2, 3, 4, 6, 10, 15 oder mehr Industriebatterien. Alle Industriebatterien einer Gruppe können gleichartig, d.h. vom gleichen Typ und entsprechend dem gleichen Industriestandard, sein.

Der Umrichter ist für das netzkonforme Einspeisen der Regelleistung in das elektrische Versorgungsnetz zuständig, d.h. er ist einerseits in der Lage, elektrische Leistung aus dem Batteriespeicher in Wechselstrom umzuwandeln und in das Versorgungsnetz einzuspeisen (positive Regelleistung). Andererseits kann der Umrichter Leistung aus dem Versorgungsnetz entnehmen, den elektrischen Strom gleichrichten und die Industriebatterien damit aufladen (negative Regelleistung). Der Umrichter kann hierzu zwei separate Geräte, nämlich einen Wechselrichter und ein Ladegerät, aufweisen. Es kann sich auch um zwei lediglich funktionale Einheiten desselben Geräts handeln.

Das Steuern der Lade- und Entladeströme erfolgt mit Hilfe einer Steuerung, und zwar individuell für eine Gruppe der Industriebatterien oder sogar individuell für einzelne der Industriebatterien, insbesondere für jede einzelne Industriebatterie des Batteriespeichers. Hierzu kann das Batteriespeicherwerk eine Vielzahl von Umrichtern aufweisen, die jeweils einer Gruppe der Industriebatterien oder einer einzigen der Industriebatterien zugeordnet sind. Ein Umrichter kann auch mit mehreren Gruppen der Industriebatterien oder mehreren einzelnen der Industriebatterien verbunden sein und so ausgebildet sein, dass er die Lade- und Entladeströme der einzelnen Gruppen der Industriebatterien oder der einzelnen Industriebatterien individuell vorgeben kann. Bei der Steuerung der Lade- und Entladeströme können die elektrischen Kenndaten der betroffenen Industriebatterien berücksichtigt werden, insbesondere maximal zulässige Lade- und Entladeströme. Ebenfalls berücksichtigt werden können die aktuellen Ladezustände der Industriebatterien.

Die individuelle Steuerung der Lade-/Entladeströme erfolgt insbesondere in Abhängigkeit eines aktuellen Ladezustands der betreffenden Industriebatterien. Das heißt beispielsweise, dass einzelne Industriebatterien oder Gruppen von Industriebatterien bei einer Anforderung negativer Regelleistung bevorzugt aufgeladen werden können, insbesondere diejenigen Industriebatterien oder Gruppen von Industriebatterien mit besonders niedrigem Ladezustand. Außerdem können einzelne Industriebatterien oder Gruppen von Industriebatterien in Abhängigkeit ihres Ladezustands für einen Lade- oder Entladevorgang ausgewählt und mit einem vorgebenen Lade-/Entladestrom betrieben werden. Ebenso kann die Steuerung beim Bereitstellen positiver Regelleistung diejenigen Industriebatterien oder Gruppen von Industriebatterien priorisieren, die eine Bedingung für das Entladen, etwa das Überschreiten einer bestimmten Spannung oder eines vorgegebenen Ladezustands, erfüllen.

Außerdem ist die Steuerung dazu ausgebildet, für eine der Industriebatterien oder für eine Gruppe der Industriebatterien eine Information über die verbleibende Lebensdauer zu speichern. Insbesondere kann die Steuerung diese Information individuell für jede der Gruppen der Industriebatterien oder sogar für jede einzelne der Industriebatterien speichern. Die Information über die verbleibende Lebensdauer kann insbesondere eine Zahl sein, die die voraussichtlich verbleibenden Lade-/Entladezyklen der Industriebatterie angibt. Beispielsweise können Industriebatterien eine Lebensdauer von 1.000 Lade-/Entladezyklen oder mehr aufweisen, die mit jedem Lade-/Entladezyklus sinkt.

Das erfindungsgemäße Batteriespeicherwerk ist besonders wirtschaftlich zu betreiben, weil die Industriebatterien im Vergleich zu Spezialanfertigungen kostengünstig sind und weil durch das Speichern der verbleibenden Lebensdauer einzelne Industriebatterien oder Gruppen von Industriebatterien ohne Weiteres dem Batteriespeicherwerk entnommen und entsprechend ihrer verbleibenden Lebensdauer einer weiteren Verwertung zugeführt werden können, insbesondere der gemäß dem jeweiligen Industriestandard vorgesehenen Verwendung der Industriebatterien entsprechend. Durch das individuelle Steuern der Lade- und Entladeströme insbesondere während des gesamten Verwendungszeitraums der Industriebatterien für das Batteriespeicherwerk können die Industriebatterien besonders schonend und unter Einhaltung sämtlicher relevanter Randbedingungen betrieben werden. Dies führt zu einem relativ hohen und insbesondere exakt quantifizier- und nachvollziehbaren Restwert der Industriebatterien.

Das Batteriespeicherwerk kann so ausgebildet sein, dass es die von den Übertragungsnetzbetreibern vorgegebenen Anforderungen an die Erbringung von Regelleistung erfüllen kann. Insbesondere kann das Batteriespeicherwerk zum Nachweis, dass diese Anforderungen erfüllt werden können, eine sogenannte Präqualifikation durchlaufen haben.

In einer Ausgestaltung ist eine der Industriebatterien eine Traktionsbatterie. Traktionsbatterien werden auch Antriebsbatterien oder Zyklenbatterien genannt und sind als Energielieferant für elektrische Verbraucher vorgesehen, hauptsächlich für elektrisch angetriebene Fahrzeuge, aber auch für sonstige Verbraucher wie Leuchten, Kühl- oder Heizungsanlagen oder sonstige Elektromotoren, beispielsweise in Wohnmobilen oder Krankenwagen. Traktionsbatterien sind zyklenfeste Akkumulatoren, die in der Lage sind, ihre gespeicherte Energie über längere Zeiträume abzugeben und viele Lade-/Entladezyklen zu überstehen. Sie können in der Regel bis zu 80% tief entladen werden, ohne Schaden zu nehmen. Traktionsbatterien werden beispielsweise für elektrische Flurförderzeuge mit hohem Leistungsvermögen und hohen Speicherkapazitäten angeboten und in großen Stückzahlen produziert. Sie sind daher für die Erfindung besonders geeignet.

In einer Ausgestaltung entspricht eine der Industriebatterien im Wesentlichen einer der Normen DIN EN 43 535, DIN EN 43 531 oder DIN EN 43 536. Die erstgenannte Norm definiert Antriebsbatterien mit einer Nennspannung von 24 Volt für Flurförderzeuge mit Zellen in wartungsarmer Ausführung und umfasst Spezifikationen der Maße, Gewichte und elektrischen Daten. Die zweitgenannte Norm betrifft entsprechende Definitionen für Antriebsbatterien für Flurförderzeuge mit einer Nennspannung von 48 Volt, die drittgenannte Norm für Antriebsbatterien für Flurförderzeuge mit einer Nennspannung von 80 Volt. Dass die Industriebatterie einer dieser Normen im Wesentlichen entspricht, bedeutet, dass zumindest die für die Verwendung im Batteriespeicherwerk relevanten Daten, insbesondere die elektrischen Kennwerte Nennspannung, Strombelastbarkeit beim Laden und Entladen und Kapazität, der jeweiligen Norm entsprechend. Geringfügige Abweichungen von der Norm, die für die Verwendung der Industriebatterien als Batteriespeicher für das Batteriespeicherwerk oder für die gemäß der Norm zugrundeliegende Verwendung als Antriebsbatterie in einem Flurförderzeug nicht entgegenstehen, sollen mit umfasst sein. Ebenfalls geeignet sind Industriebatterien entsprechend einer der Normen DIN 43 535, DIN 43 531 und DIN 43 536. Diese definieren im Wesentlichen den drei erstgenannten DIN EN-Normen gleicher Nummerierung entsprechende Antriebsbatterien für Flurförderzeuge unter der Maßgabe, dass die Batterien Zellen der Maßreihe L nach DIN-EN-60 254-2 für Flurförderzeuge aufweisen. Ebenfalls geeignet sind Industriebatterien entsprechend der Norm DIN 43 537. Diese beschreibt Bleiakkumulatoren, nämlich Antriebsbatterien mit 24 V, 36 V, 48 V, 72 V, 80 V für Flurförderzeuge mit Zellen der Maßreihe E nach DIN EN 60254-2. Ebenfalls geeignet sind Industriebatterien entsprechend der Norm DIN 40 540. Die genannten Batterietypen sind für die erfindungsgemäße Verwendung als Batteriespeicher besonders geeignet. Unabhängig vom genauen Typ können die verwendeten Industriebatterien die gesetzlichen Rahmenbedingungen und von den zuständigen Verbänden vorgegebenen Richtlinien einhalten. Einschlägig sind je nach Batterietyp insbesondere die nachfolgend aufgeführten Vorschriften: Das Batteriegesetz (BattG), das Bundesimmissionsgesetz (BImSchG), Merkblätter des ZVEI, d.h. des Zentralverbands Elektrotechnik- und Elektronikindustrie e.V., insbesondere des Arbeitskreises "Industrie Technik im Fachausschuss "Industriebatterien" des Fachverbandes Batterien, wie beispielsweise das Merkblatt "Dimensionierung, Zuordnung und Ausführungen von Steckvorrichtungen und Anschlussleitungen für Antriebsbatterien und Ladegeräte", sowie Normen des VDE, insbesondere VDE 0509 Teil 4 2001-03 DIN EN 60086-4 Primärbatterien - Teil 4: Sicherheitsnorm für Lithium-Batterien (IEC 60086-4: 2000) Deutsche Fassung EN 60086-4: 2000, VDE 0509 Teil 5 2001-08 DIN EN 60086-5 Primärbatterien - Teil 5: Sicherheit von Batterien mit wässrigem Elektrolyt (IEC 60086-5: 2000) Deutsche Fassung EN 60086-5: 2000, VDE 0510 1977-01 DIN VDE 0510; DIN 57510 Bestimmung für Akkumulatoren und Batterie-Anlagen, VDE 0510 Teil 2 2001-12 DIN EN 50272-2 Sicherheitsanforderungen an Batterien und Batterieanlagen - Teil 2: Stationäre Batterien Deutsche Fassung EN 50272-2: 2001, VDE 0510 Teil 3 2003-05 DIN EN 50272-3 Sicherheitsanforderungen an Batterien und Batterieanlagen - Teil 3: Antriebsbatterien für Elektrofahrzeuge Deutsche Fassung EN 50272-3: 2002 VDE 0510 Teil 7 1988-08 DIN, VDE 0510-7 Akkumulatoren und Batterieanlagen - Einsatz von Gerätebatterien, VDE 0510 Teil 8 2003-09 DIN EN 62133 Akkumulatoren und Batterien mit alkalischen oder anderen nicht säurehaltigen Elektrolyten - Sicherheitsanforderungen für tragbare gasdichte Akkumulatoren und daraus hergestellte Batterien für die Verwendung in tragbaren Geräten (IEC 62133: 2002) Deutsche Fassung EN 62133: 2003.

In einer Ausgestaltung umfasst der Batteriespeicher unterschiedliche Typen von Industriebatterien. Beim Bereitstellen der Regelleistung werden die elektrischen Kenndaten der unterschiedlichen Typen von Batterien berücksichtigt, sodass jeder Batterietyp unter optimalen Bedingungen eingesetzt wird. Die unterschiedlichen Typen von Industriebatterien können jeweils eine der Gruppen der Industriebatterien bilden, sodass ein individuelles Vorgeben von Lade- und Entladeströmen für jede dieser Gruppen entsprechend dem jeweiligen Batterietyp gewählt werden kann.

In einer Ausgestaltung ist eine der Industriebatterien neu und/oder hat eine nach ihrer Herstellung vorgesehene Anzahl von Lade-/Entladezyklen noch nicht durchlaufen. Industriebatterien werden in der Regel noch vom Hersteller vor der Auslieferung einer vorgegebenen Anzahl von Lade-/Entladezyklen ausgesetzt, was erst zur vollen Leistungsfähigkeit der Industriebatterien führt. Das Durchlaufen dieser Lade-/Entladezyklen wird auch als Vorzyklen bezeichnet und bedeutet einen erheblichen Aufwand bei der Herstellung der Industriebatterien. Insbesondere ist für dieses Vorzyklen ein nicht zu vernachlässigender Einsatz elektrischer Energie erforderlich. Bei der Erfindung kann eine der Industriebatterien oder können gegebenenfalls alle in den Batteriespeicher eingebrachten Industriebatterien dem Herstellungsprozess bereits vor diesem Vorzyklen entnommen werden und das Durchlaufen der ersten Lade-/Entladezyklen kann erst innerhalb des Batteriespeicherwerks stattfinden, wobei unmittelbar Regelleistung zur Verfügung gestellt wird. Gegebenenfalls können die Lade- und Entladeströme an das anfängliche/aktuelle Leistungsvermögen der neuen Industriebatterien angepasst werden, beispielsweise können niedrigere Lade-/Entladeströme verwendet werden, als für bereits vorgezykelte Batterien des betreffenden Industriestandards vorgesehen. Auf diese Weise wird die Wirtschaftlichkeit des Batteriespeicherwerks weiter verbessert, weil die zu verwendenden Industriebatterien unter Umständen kostengünstiger erworben werden können und/oder bereits die ersten Lade-/Entladezyklen der Industriebatterien gewinnbringend ausgenutzt werden können. Beispielsweise können drei vollständige Lade-/Entladezyklen oder mehr erforderlich sein, bis die Industriebatterie die ihrer Spezifikation entsprechende Leistungsfähigkeit erreicht.

In einer Ausgestaltung weist eine Industriebatterie einen mit der Steuerung verbundenen Level-Sensor zum Erfassen eines Elektrolytstands der Industriebatterie auf und die Steuerung ist dazu ausgebildet, die Lade- und Entladeströme der Industriebatterie zu begrenzen, wenn der erfasste Elektrolytstand einen vorgegebenen Mindestwert unterschreitet. Bevorzugt sind alle Industriebatterien des Batteriespeichers oder einer Gruppe der Industriebatterien mit einem solchen Level-Sensor ausgerüstet. Durch das Begrenzen der Lade- und Entladeströme bei ungenügendem Elektrolytstand wird eine Beschädigung der Industriebatterie vermieden. Insbesondere ist es möglich, beim Erfassen eines den vorgegebenen Mindestwert unterschreitenden Elektrolytstands eine Fehlermeldung abzusetzen und dadurch für ein schnelles Nachfüllen des Elektrolyts zu sorgen. Das Nachfüllen des Elektrolyts kann manuell erfolgen oder automatisiert werden.

In einer Ausgestaltung weist eine Industriebatterie einen mit der Steuerung verbundenen Temperatur-Sensor zum Erfassen einer Temperatur der Industriebatterie auf und die Steuerung ist dazu ausgebildet, die Lade- und Entladeströme der Industriebatterie zu begrenzen, wenn die erfasste Temperatur einen vorgegebenen Mindestwert überschreitet. Bevorzugt sind wiederum alle Industriebatterien des Batteriespeichers oder einer der Gruppen der Industriebatterien mit einem solchen Temperatur-Sensor ausgerüstet. Auch durch diese Maßnahme kann eine Überlastung der Industriebatterien bei zu hohen Temperaturen oder ein Beschädigen durch Überhitzen vermieden werden. Dies kommt insbesondere der Lebensdauer der Industriebatterien zugute.

In einer Ausgestaltung ist die Steuerung dazu ausgebildet, den Ladestrom einer der Industriebatterien oder einer Gruppe der Industriebatterien auf einen für eine Ausgleichsladung vorgegebenen Wert einzustellen, wenn eine Bedingung für eine Ausgleichsladung eingetreten ist. Die Bedingung für eine Ausgleichsladung kann beispielsweise das Durchlaufen einer vorgegebenen Anzahl von vollständigen Lade-/Entladezyklen, ein abgeschlossener Ladevorgang mit einer Strom-Spannungs-Kennlinie, eine Tiefentladung unter einen vorgegebenen Mindestspannungswert und/oder unter eine vorgegebene Kapazität von beispielsweise 20% der Nennkapazität oder das Unterschreiten einer vorgegebenen Mindest-Elektrolytdichte von beispielsweise 1,13 kg/l sein. Tritt die Bedingung für eine Ausgleichsladung ein, wird der Ladestrom von der Steuerung auf einen für eine Ausgleichsladung vorgegebenen Wert, also auf einen niedrigeren Wert, als für einen gewöhnlichen Ladevorgang möglich, eingestellt. Beispielsweise kann der Ladestrom auf maximal 5 A je 100 Ah Nennkapazität begrenzt werden.

Die oben angegebene Aufgabe wird ebenfalls gelöst durch das Verfahren zum Bereitstellen von Regelenergie für ein elektrisches Versorgungsnetz mit den Merkmalen des Anspruchs 9. Vorteilhafte Ausgestaltungen des Verfahrens sind in den sich anschließenden Unteransprüchen angegeben.

Das Verfahren zum Bereitstellen von Regelenergie für ein elektrisches Versorgungsnetz weist die folgenden Schritte auf:
- Einbringen einer Industriebatterie oder einer Gruppe von Industriebatterien in einen Batteriespeicher eines Batteriespeicherwerks, der eine Vielzahl von Industriebatterien aufweist,
- Eingeben einer Information über die verbleibende Lebensdauer der Industriebatterie oder der Gruppe von Industriebatterien zum Zeitpunkt des Einbringens in eine Steuerung,
- Bereitstellen von Regelleistung durch Laden und Entladen der Industriebatterie oder der Gruppe von Industriebatterien, wobei die Steuerung die Lade- und Entladeströme individuell steuert und die Regelleistung mit Hilfe eines Umrichters in netzkonformer Weise in das elektrische Versorgungsnetz eingespeist wird,
- Aktualisieren der Information über die verbleibende Lebensdauer der Industriebatterie oder der Gruppe von Industriebatterien,
- Entnehmen der Industriebatterie oder der Gruppe von Industriebatterien aus dem Batteriespeicher und Auswerten der Information über deren verbleibende Lebensdauer zum Zeitpunkt des Entnehmens.

Zu den Merkmalen und Vorteilen des erfindungsgemäßen Verfahrens wird zunächst auf die vorstehenden Erläuterungen des erfindungsgemäßen Batteriespeichers, der korrespondierende Merkmale aufweist, verwiesen. Insbesondere kann das Verfahren mit einem Batteriespeicher der vorstehend erläuterten Art ausgeführt werden.

Das Verfahren umfasst das Einbringen einer Industriebatterie in einen Batteriespeicher, die Verwendung des Batteriespeichers zum Bereitstellen von Regelleistung und das Entnehmen der Industriebatterie. Beim Einbringen der Industriebatterie wird eine Information über die zu diesem Zeitpunkt gegebene Lebensdauer der Industriebatterie in eine Steuerung, insbesondere die Steuerung des Batteriespeicherwerks, eingegeben. Diese Information wird aktualisiert, d.h. insbesondere in Abhängigkeit der zur Verfügung gestellten Regelleistung und/oder der Lade- und Entladeströme der betreffenden Industriebatterie angepasst. Auf diese Weise kann in der Steuerung stets eine aktuelle Information über die verbleibende Lebensdauer der Industriebatterie zur Verfügung stehen. Diese wird ausgewertet, wenn die Industriebatterie dem Batteriespeicher entnommen wird und kann dann insbesondere von Bedeutung sein zur Festlegung eines Restwerts der entnommenen Industriebatterie. Auf diese Weise kann die dem Batteriespeicher entnommene Industriebatterie einer weiteren Verwertung zugeführt werden. Gleichzeitig ist es möglich, den Batteriespeicher flexibel mit neuen oder gebrauchten Batterien aufzustocken, wobei wiederum die zum Zeitpunkt des Einbringens der zusätzlichen Industriebatterien in den Batteriespeicher verbleibenden Lebensdauern eingegeben werden.

In einer Ausgestaltung weist das Verfahren den folgenden weiteren Schritt auf:
• Bestimmungsgemäßes Verwenden der Industriebatterie oder der Gruppe von Industriebatterien in einer von der Anwendung im Batteriespeicherwerk verschiedenen Anwendung.

Bei der von der Anwendung im Batteriespeicherwerk verschiedenen Anwendung kann es sich insbesondere um die entsprechend dem Industriestandard der Industriebatterie vorgesehene Anwendung handeln, beispielsweise eine Anwendung der Industriebatterie als Antriebsbatterie für ein Flurförderzeug. In dieser Ausgestaltung ist also vorgesehen, die Industriebatterie oder Gruppe von Industriebatterien nur für einen einem Teil ihrer Lebensdauer entsprechenden Zeitraum als Batteriespeicher für das Batteriespeicherwerk einzusetzen. In einer sich anschließenden Verwendungsphase dient die Industriebatterie einem anderen Verwendungszweck. Alternativ ist es möglich, die Industriebatterie so lange in dem Batteriespeicherwerk einzusetzen, bis die verbleibende Lebensdauer eine weitere Verwendung der Batterie nicht sinnvoll zulässt. In diesem Fall kann die dem Batteriespeicher entnommene Industriebatterie einem Recylingprozess zugeführt werden.

In einer Ausgestaltung des Verfahrens ist die in den Batteriespeicher eingebrachte Industriebatterie oder Gruppe von Industriebatterien neu und/oder hat eine nach ihrer Herstellung vorgesehene Anzahl von Lade-/Entladezyklen noch nicht durchlaufen. Auf die vorstehenden Erläuterungen zum korrespondieren Merkmal des Batteriespeicherwerks wird verwiesen.

In einer Ausgestaltung des Verfahrens durchläuft eine in den Batteriespeicher eingebrachte Industriebatterie oder Gruppe von Industriebatterien nach dem Einbringen eine vorgegebene Anzahl von Lade-/Entladezyklen mit einem vorgegebenen Lade-/Entladestrom. Der vorgegebene Lade-/Entladestrom für die ersten Lade-/Entladezyklen unmittelbar nach dem Einbringen in den Batteriespeicher kann beispielsweise die Hälfte des zulässigen Lade-/Entladestroms der Industriebatterie betragen, oder einen sonstigen vorgegebenen Wert, der für das Vorzyklen der Industriebatterie vorteilhaft ist.

In einer Ausgestaltung des Verfahrens erfasst die Steuerung einen Elektrolytstand einer Industriebatterie und begrenzt die Lade- und Entladeströme der Industriebatterie, wenn der Elektrolytstand einen vorgegebenen Mindestwert unterschreitet. Auf die vorstehenden Erläuterungen zum korrespondierenden Merkmal des Batteriespeicherwerks wird verwiesen.

In einer Ausgestaltung des Verfahrens erfasst die Steuerung eine Temperatur einer Industriebatterie und begrenzt die Lade- und Entladeströme der Industriebatterie, wenn die Temperatur einen vorgegebenen Mindestwert überschreitet. Auch hierzu wird auf die vorstehenden Erläuterungen des korrespondierenden Merkmals des Batteriespeicherwerks verwiesen.

In einer Ausgestaltung des Verfahrens stellt die Steuerung den Ladestrom einer Industriebatterie oder einer Gruppe von Industriebatterien auf einen für eine Ausgleichsladung vorgegebenen Wert ein, wenn eine Bedingung für eine Ausgleichsladung eingetreten ist. Auch hierzu wird auf die vorstehenden Erläuterungen zu den korrespondierenden Merkmalen des Batteriespeicherwerks verwiesen.

Die Erfindung wird nachfolgend anhand eines in zwei Figuren dargestellten Ausführungsbeispiels näher erläutert. Es zeigen:
- Fig. 1: ein erfindungsgemäßes Batteriespeicherwerk in einer vereinfachten schematischen Darstellung,
- Fig. 2: einen beispielhaften Lastgang, den das Batteriespeicherwerk im Rahmen einer Präqualifikation zum Nachweis der regelkonformen Erbringung von Sekundärregelleistung durchlaufen hat.

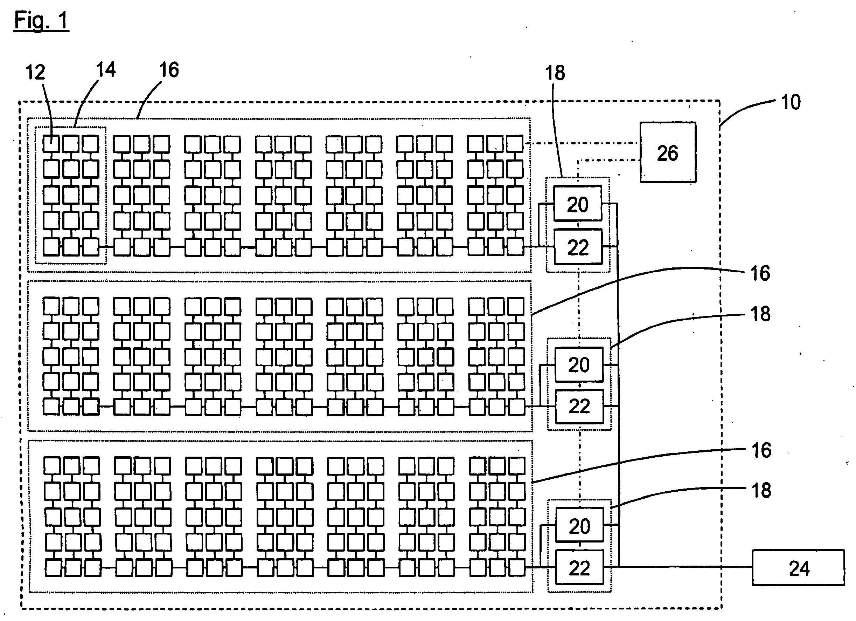

Figur 1 zeigt ein Batteriespeicherwerk 10 mit einer Vielzahl von Industriebatterien 12. Jeweils 15 der Industriebatterien 12 sind zu einem Block 14 zusammengefasst, wobei jeder Block 14 ein nicht dargestelltes Regal mit fünf Regalböden aufweist, auf denen jeweils drei der Industriebatterien 12 angeordnet sind.

Sechs der Blöcke 14 sind zu einem Feld 16 zusammengefasst, das sich über sechs Regale erstreckt und insgesamt 90 Industriebatterien 12 aufweist. Die 90 Industriebatterien 12 des Felds 16 bilden eine Gruppe von Industriebatterien und sind mit einem Umrichter 18 elektrisch verbunden. Die Industriebatterien 12 des Felds 16 sind auch untereinander elektrisch verbunden und der Umrichter 18 kann die Lade- und Entladeströme für alle Industriebatterien 12 des Felds 16 einheitlich steuern.

Der Umrichter 18 weist ein Ladegerät 20 und einen Wechselrichter 22 auf und ist mit einem elektrischen Versorgungsnetz 24 verbunden. Den Industriebatterien 12 des Felds 16 entnommene elektrische Leistung kann über den Wechselrichter 22 des Umrichters 18 als positive Regelleistung in das elektrische Versorgungsnetz 24 eingespeist werden. Über das Ladegerät 20 des Umrichters 18 kann dem elektrischen Versorgungsnetz 24 elektrische Leistung entnommen und in die Industriebatterien 12 des Felds 16 eingespeist werden. Dies entspricht einer Bereitstellung von negativer Regelleistung.

Zum Steuern der Lade- und Entladeströme dient eine Steuerung 26, die über strichpunktiert dargestellte Steuerleitungen mit dem Umrichter 18 verbunden ist. Weitere Steuerleitungen stellen eine Verbindung zu nicht dargestellten Elektrolyt- und Temperatursensoren her, die jeder der Industriebatterien 12 zugeordnet sind. Dies ist in der Figur 1 beispielhaft nur für die ganz oben rechts befindliche Industriebatterie 12 angedeutet. Die Steuerung 26 kann außer den Daten der genannten Sensoren die aktuellen Ladezustände der Industriebatterien 12 beim Steuern der Lade- und Entladeströme berücksichtigen. Außerdem speichert die Steuerung 26 eine Information über die verbleibende Lebensdauer der Industriebatterien 12, insbesondere individuell für jede einzelne der Industriebatterien 12.

Diese Information über die verbleibende Lebensdauer jeder der Industriebatterien 12 wird beim Einbringen einer Industriebatterie 12 in den Batteriespeicher in die Steuerung 26 eingegeben und während des Erbringens der Regelleistung von der Steuerung 26 fortlaufend aktualisiert, sodass zu jedem Zeitpunkt für jede der Industriebatterien 12 eine Information über die verbleibende Lebensdauer vorliegt.

Das gesamte Batteriespeicherwerk 10 ist modular aufgebaut und weist insgesamt drei Felder 16 mit jeweils 90 Industriebatterien 12 auf, wobei jedem der Felder 16 ein Umrichter 18 zugeordnet ist.

Bei den Industriebatterien 12 handelt es sich um Traktionsbatterien gemäß DIN EN 43 531 mit einer Nennspannung von 48 V und einer durchschnittlichen Kapazität von 700 Ah. Die Batterien weisen Zellen mit einer Nennspannung von 2 V auf. Es handelt sich um Bleiakkumulatoren. Die 15 Industriebatterien 12 jedes Blocks 14 sind in Reihe geschaltet und können beim Ladevorgang, d.h. beim Bereitstellen negativer Regelleistung, mit einer Spannung von 720 V betrieben werden. Der zulässige Ladestrom beträgt während der Hauptladephase 40 A je 100 Ah Kapazität, d.h. 280 A. Somit ist eine Leistung von 202 kVA je Block 14 verfügbar. Dies gilt für eine Ladezeit von ca. 1,7 Stunden.

Beim Bereitstellen positiver Regelleistung, d.h. beim Entladevorgang, kann von einer mittleren Zellenspannung von 1,8 V ausgegangen werden. Die Betriebsspannung jedes Blocks 14 verringert sich dadurch auf ungefähr 650 V. Bei Verwendung eines Entladestroms von 30 A je 100 Ah Kapazität können 210 A zur Verfügung gestellt werden, entsprechend einer Leistung von 136 kVA. Dies ist möglich für einen Entladezeitraum von ca. 2,4 Stunden.

Durch die Zusammenfassung von jeweils sechs Blöcken 14 zu einem Feld 16 kann jedes Feld 16 ungefähr 1,2 MVA negative Regelleistung und ungefähr 0,8 MVA positive Regelleistung zur Verfügung stellen. Ladegerät 20 und Wechselrichter 22 des Umrichters 18 sind entsprechend dimensioniert.

Durch den modularen Aufbau können beliebige Anzahlen zusätzlicher Felder 16 hinzugefügt werden, um gewünschte Leistungswerte des Batteriespeicherwerks zu erreichen, beispielsweise mindestens 5 MVA, mindestens 10 MVA, mindestens 15 MVA oder mehr. Diese Größenordnungen erfüllen die aktuellen Mindestanforderungen an die Erbringung von Regelenergie (Primär-, Sekundär- und Minutenreserve.

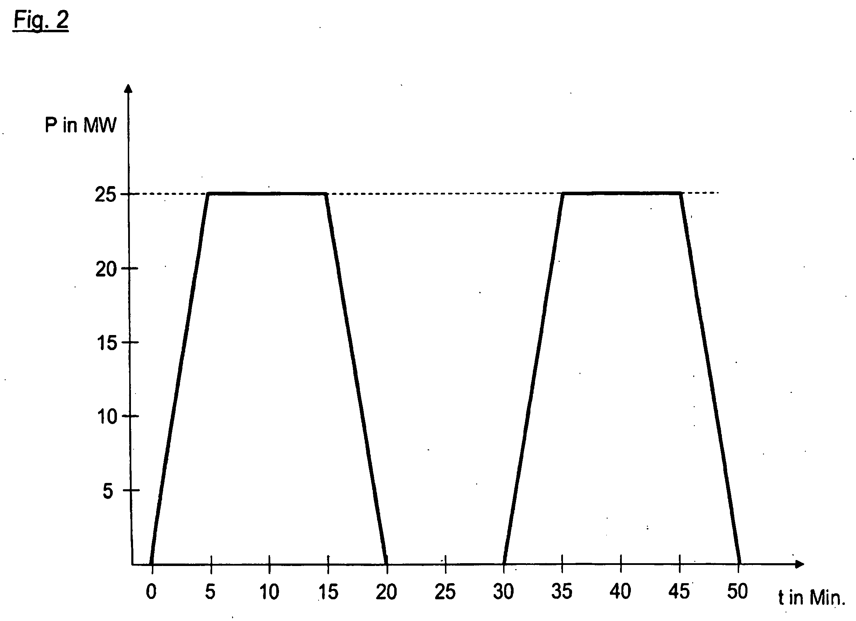

In der Fig. 2 ist beispielhaft dargestellt, wie ein erfindungsgemäßes Batteriespeicherwerk die Anforderungen der Übertragungsnetzbetreiber an die Erbringung von Sekundärregelleistung erfüllen kann. Gezeigt ist ein Lastgang des Batteriespeicherwerks, also die eingespeiste Regelleistung in MW über die Zeit in Minuten. Im Beispiel ruft der Übertragungsnetzbetreiber zum Zeitpunkt t = 0 Minuten erstmals Regelleistung in Höhe von 25 MW ab. Die eingespeiste Leistung wird dann innerhalb von maximal 5 Minuten auf diesen Sollwert erhöht und für sich anschließende 10 Minuten aufrecht erhalten. Anschließend wird die eingepeiste Leistung innerhalb eines Zeitraums von 5 Minuten auf Null zurückgefahren. Nach einer Pause von im Beispiel 10 Minuten, zum Zeitpunkt von t = 30 Minuten, wird erneut Regelleistung in Höhe von 25 MW vom Übertragungsnetzbetreiber abgerufen und daraufhin in das Netz eingespeist. Dies geschieht wiederum mit dem für den ersten Abruf geschilderten zeitlichen Ablauf.

Für die Erbringung von Primär- und Minutenreserve-Regelleistung gelten auf vergleichbare Weise festgelegte Mindestanforderungen, die von dem Batteriespeicherwerk bei entsprechender Dimensionierung ebenfalls eingehalten werden können.

## Patentansprüche

1. Batteriespeicherwerk (10) mit einem Batteriespeicher, der eine Vielzahl von Batterien aufweist, und einer Einrichtung zum Bereitstellen von von einem Übertragungsnetzbetreiber abgerufener Regelleistung für ein elektrisches Versorgungsnetz (24) aus dem Batteriespeicher, die einen Umrichter (18) aufweist, **dadurch gekennzeichnet, dass** die Batterien Industriebatterien (12) sind, nämlich Antriebsbatterien für Flurförderzeuge mit einer Nennspannung von 24 Volt, 48 Volt oder 80 Volt, und eine Steuerung (26) vorhanden ist, die dazu ausgebildet ist, für eine der Industriebatterien (12) oder für eine Gruppe der Industriebatterien (12) die Lade- und Entladeströme beim Bereitstellen der Regelleistung individuell zu steuern und eine Information über die verbleibende Lebensdauer zu speichern.

2. Batteriespeicherwerk (10) nach Anspruch 1, **dadurch gekennzeichnet, dass** eine der Industriebatterien (12) eine Traktionsbatterie ist.

3. Batteriespeicherwerk (10) nach Anspruch 1 oder 2, **dadurch gekennzeichnet, dass** der Batteriespeicher unterschiedliche Typen von Industriebatterien (12) umfasst.

4. Batteriespeicherwerk (10) nach einem der Ansprüche 1 bis 3, **dadurch gekennzeichnet, dass** eine der Industriebatterien (12) neu ist und eine nach ihrer Herstellung vorgesehene Anzahl von Lade-/Entladezyklen noch nicht durchlaufen hat.

5. Batteriespeicherwerk (10) nach einem der Ansprüche 1 bis 4, **dadurch gekennzeichnet, dass** eine Industriebatterie (12) einen mit der Steuerung verbundenen Level-Sensor zum Erfassen eines Elektrolytstands der Industriebatterie (12) aufweist und die Steuerung (26) dazu ausgebildet ist, die Lade- und Entladeströme der Industriebatterie (12) zu begrenzen, wenn der erfasste Elektrolytstand einen vorgegebenen Mindestwert unterschreitet.

6. Batteriespeicherwerk (10) nach einem der Ansprüche 1 bis 5, **dadurch gekennzeichnet, dass** eine Industriebatterie (12) einen mit der Steuerung (26) verbundenen Temperatur-Sensor zum Erfassen einer Temperatur der Industriebatterie (12) aufweist und die Steuerung (26) dazu ausgebildet ist, die Lade- und Entladeströme der Industriebatterie (12) zu begrenzen, wenn die erfasste Temperatur einen vorgegebenen Mindestwert überschreitet.

7. Batteriespeicherwerk (10) nach einem der Ansprüche 1 bis 6, **dadurch gekennzeichnet, dass** die Steuerung (26) dazu ausgebildet ist, den Ladestrom einer der Industriebatterien (12) oder einer Gruppe der Industriebatterien (12) auf einen für eine Ausgleichsladung vorgegebenen Wert einzustellen, wenn eine Bedingung für eine Ausgleichsladung eingetreten ist.

8. Verfahren zum Betreiben eines Batteriespeicherwerks (10) mit den folgenden Schritten:
• Einbringen einer Industriebatterie (12) oder einer Gruppe von Industriebatterien (12) in einen Batteriespeicher eines Batteriespeicherwerks (10), der eine Vielzahl von Industriebatterien (12) aufweist, nämlich Antriebsbatterien für Flurförderzeuge mit einer Nennspannung von 24 Volt, 48 Volt oder 80 Volt,
• Eingeben einer Information über die zum Zeitpunkt des Einbringens verbleibende Lebensdauer der Industriebatterie (12) oder der Gruppe von Industriebatterien (12) in eine Steuerung,
• Bereitstellen von von einem Übertragungsnetzbetreiber abgerufener Regelleistung durch Laden und Entladen der Industriebatterie (12) oder der Gruppe von Industriebatterien (12), wobei die Steuerung die Lade- und Entladeströme individuell steuert und die Regelleistung mit Hilfe eines Umrichters (18) in netzkonformer Weise in das elektrische Versorgungsnetz (24) eingespeist wird,
• Aktualisieren der Information über die verbleibende Lebensdauer der Industriebatterie (12) oder der Gruppe von Industriebatterien (12),
• Entnehmen der Industriebatterie (12) oder der Gruppe von Industriebatterien (12) aus dem Batteriespeicher und Auswerten der Information über deren verbleibende Lebensdauer zum Zeitpunkt des Entnehmens.

9. Verfahren nach Anspruch 8, **dadurch gekennzeichnet, dass** das Verfahren den folgenden weiteren Schritt aufweist:
• Bestimmungsgemäßes Verwenden der Industriebatterie (12) oder der Gruppe von Industriebatterien (12) in einer von der Anwendung im Batteriespeicherwerk (10) verschiedenen Anwendung.

10. Verfahren nach Anspruch 8 oder 9, **dadurch gekennzeichnet, dass** die in den Batteriespeicher eingebrachte Industriebatterie (12) oder Gruppe von Industriebatterien (12) neu ist und/oder eine nach ihrer Herstellung vorgesehene Anzahl von Lade-/Entladezyklen noch nicht durchlaufen hat.

11. Verfahren nach einem der Ansprüche 8 bis 10, **dadurch gekennzeichnet, dass** eine in den Batteriespeicher eingebrachte Industriebatterie (12) oder Gruppe von Industriebatterien (12) nach dem Einbringen eine vorgegebene Anzahl von Lade-/Entladezyklen mit einem vorgegebenen Lade-/Entladestrom durchläuft.

12. Verfahren nach einem der Ansprüche 8 bis 11, **dadurch gekennzeichnet, dass** die Steuerung einen Elektrolytstand einer Industriebatterie (12) erfasst und die Lade- und Entladeströme der Industriebatterie (12) begrenzt, wenn der Elektrolytstand einen vorgegebenen Mindestwert unterschreitet.

13. Verfahren nach einem der Ansprüche 8 bis 12, **dadurch gekennzeichnet, dass** die Steuerung eine Temperatur einer Industriebatterie (12) erfasst und die Lade- und Entladeströme der Industriebatterie (12) begrenzt, wenn die Temperatur einen vorgegebenen Mindestwert überschreitet.

14. Verfahren nach einem der Ansprüche 8 bis 13, **dadurch gekennzeichnet, dass** die Steuerung den Ladestrom einer Industriebatterie (12) oder einer Gruppe von Industriebatterien (12) auf einen für eine Ausgleichsladung vorgegebenen Wert einstellt, wenn eine Bedingung für eine Ausgleichsladung eingetreten ist.

## Claims

1. A battery storage system (10) with a battery storage array comprising a plurality of batteries, and a device for providing controlling power requested by a transmission system operator for an electrical power network (24) from the battery storage array which comprises a converter (18), **characterized in**
**that** the batteries are industrial batteries (12), i.e., drive batteries for industrial trucks having a nominal voltage of 24 V, 48 V or 80 volts, and a control (26) is available which is designed to individually control the charge current and discharge current when providing the controlling power for one of the industrial batteries (12), or for a group of the industrial batteries (12), and is designed to save information on the remaining life.

2. The battery storage system (10) according to claim 1, **characterized in that** one of the industrial batteries (12) is a traction battery.

3. The battery storage system (10) according to claim 1 or 2, **characterized in that** the battery storage array comprises different types of industrial batteries (12).

4. The battery storage system (10) according to one of claims 1 to 3, **characterized in that** one of the industrial batteries (12) is new, and has not completed its specified number of charging/discharging cycles after its production.

5. The battery storage system (10) according to one of claims 1 to 4, **characterized in that** an industrial battery (12) has a level sensor connected to the control for detecting an electrolyte level of the industrial battery (12), and the control (26) is designed to limit the charging and discharging current of the industrial battery (12) when the detected electrolyte level falls below a specified minimum value.

6. The battery storage system (10) according to one of claims 1 to 5, **characterized in that** an industrial battery (12) has a temperature sensor connected to the control (26) for detecting a temperature of the industrial battery (12), and the control (26) is designed to limit the charging and discharging current of the industrial battery (12) when the detected temperature exceeds a specified minimum value.

7. The battery storage system (10) according to one of claims 1 to 6, **characterized in that** the control (26) is designed to set the charging current for one of the industrial batteries (12), or a group of the industrial batteries (12), to a value specified for an equalizing charge when a condition for an equalizing charge has occurred.

8. A method for operating a battery storage system (10) comprising the following steps:
• Incorporation of an industrial battery (12), or a group of industrial batteries (12), into a battery storage array of a battery storage system (10) having a plurality of industrial batteries (12), i.e., drive batteries for industrial trucks with a nominal voltage of 24 V, 48 V or 80 V,
• Entry into a control of information on the life of the industrial battery (12), or the group of industrial batteries (12), remaining at the time of incorporation,
• Provision of control power requested by a transmission system operator by charging and discharging the industrial battery (12), or the group of industrial batteries (12), wherein the control individually controls the charging and discharging currents, and the control power is fed into the electrical supply system (24) with the assistance of a converter (18) in a system-compliant manner,
• Updating the information on the remaining life of the industrial battery (12), or the group of industrial batteries (12),
• Removal of the industrial battery (12), or the group of industrial batteries (12), from the battery storage array, and evaluation of information on the remaining life at the time of removal.

9. The method according to claim 8, **characterized in that** the method comprises the following additional step:
• Proper use of the industrial battery (12), or the group of industrial batteries (12), in an application different from the application in the battery storage system (10).

10. The method according to claim 8 or 9, **characterized in that** the industrial battery (12), or a group of industrial batteries (12), is new, and/or has not completed the number of specified charging/discharging cycles following its manufacture.

11. The method according to one of claims 8 to 10, **characterized in that** an industrial battery (12), or group of industrial batteries (12), incorporated in the battery storage array passes through a specified number of charging/discharging cycles with a specified charging/discharging current after being incorporated.

12. The method according to one of claims 8 to 11, **characterized in that** the control detects an electrolyte level of an industrial battery (12) and limits the charging and discharging current of the industrial battery (12) when the electrolyte level falls below a specified minimum value.

13. The method according to one of claims 8 to 12, **characterized in that** the control detects a temperature of an industrial battery (12) and limits the charging and discharging current of the industrial battery (12) when the temperature exceeds a specified minimum value.

14. The method according to one of claims 8 to 13, **characterized in that** the control sets the charging current for one of the industrial batteries (12), or a group of industrial batteries (12), to a value specified for an equalizing charge when a condition for an equalizing charge has occurred.

## Revendications

1. Centrale de stockage de batterie (10) avec un stockage de batterie qui présente une multiplicité de batteries, et avec un dispositif pour la fourniture d'une puissance de régulation appelée par un gestionnaire de réseau de transport pour un réseau d'alimentation (24) à partir du stockage de batterie qui présente un convertisseur de fréquence (18), **caractérisée en ce que** les batteries sont des batteries industrielles (12), à savoir des batteries d'entraînement pour des chariots de manutention avec une tension nominale de 24 volts, 48 volts ou 80 volts, et **en ce qu'**il existe une commande (26) qui est constituée pour commander individuellement, pour une des batteries industrielles (12) ou pour un groupe de batteries industrielles (12), les courants de charge et de décharge lors de la fourniture de la puissance de régulation et pour stocker une information sur la durée de vie restante.

2. Centrale de stockage de batterie (10) selon la revendication 1, **caractérisée en ce qu'**une des batteries industrielles (12) est une batterie de traction.

3. Centrale de stockage de batterie (10) selon la revendication 1 ou 2, **caractérisée en ce que** le stockage de batterie comprend différents types de batteries industrielles (12).

4. Centrale de stockage de batterie (10) selon l'une des revendications 1 à 3, **caractérisée en ce qu'**une des batteries industrielles (12) est neuve et n'a pas encore parcouru après sa fabrication un nombre prévu de cycles de charge/décharge.

5. Centrale de stockage de batterie (10) selon l'une des revendications 1 à 4, **caractérisée en ce qu'**une batterie industrielle (12) présente un capteur de niveau raccordé à la commande pour la détection d'un niveau d'électrolyte de la batterie industrielle (12), et **en ce que** la commande (26) est constituée pour limiter les courants de charge et de décharge de la batterie industrielle (12) quand le niveau d'électrolyte détecté passe au-dessous d'une valeur minimale prédéfinie.

6. Centrale de stockage de batterie (10) selon l'une des revendications 1 à 5, **caractérisée en ce qu'**une batterie industrielle (12) présente un capteur de température raccordé à la commande (26) pour la détection d'une température de la batterie industrielle (12), et **en ce que** la commande (26) est constituée pour limiter les courants de charge et de décharge de la batterie industrielle (12) quand la température détectée passe au-dessus d'une valeur minimale prédéfinie.

7. Centrale de stockage de batterie (10) selon l'une des revendications 1 à 6, **caractérisée en ce que** la commande (26) est constituée pour régler le courant de charge d'une des batteries industrielles (12) ou d'un groupe des batteries industrielles (12) à une valeur prédéfinie pour une charge d'égalisation quand une condition pour une charge d'égalisation apparaît.

8. Procédé de fonctionnement d'une centrale de stockage de batterie (10) avec les étapes suivantes :
• mise en place d'une batterie industrielle (12) ou d'un groupe de batteries industrielles (12) dans un stockage de batterie d'une centrale de stockage de batterie (10) qui présente une multiplicité de batteries industrielles (12), à savoir des batteries d'entraînement pour des chariots de manutention avec une tension nominale de 24 volts, 48 volts ou 80 volts,
• entrée, dans une commande, d'une information sur la durée de vie restante, au moment de la mise en place, de la batterie industrielle (12) ou du groupe de batteries industrielles (12),
• fourniture d'une puissance de régulation appelée par un gestionnaire de réseau de transport par le chargement et le déchargement de la batterie industrielle (12) ou du groupe de batteries industrielles (12), la commande commandant individuellement les courants de charge et de décharge, et la puissance de régulation étant injectée dans le réseau d'alimentation (24) électrique à l'aide d'un convertisseur de fréquence (18) d'une façon conforme au réseau,
• actualisation de l'information sur la durée de vie restante de la batterie industrielle (12) ou du groupe de batteries industrielles (12),
• enlèvement de la batterie industrielle (12) ou du groupe de batteries industrielles (12) hors du stockage de batterie et analyse de l'information sur leur durée de vie restante au moment de l'enlèvement.

9. Procédé selon la revendication 8, **caractérisé en ce que** le procédé présente l'étape supplémentaire suivante :
• utilisation conforme de la batterie industrielle (12) ou du groupe de batteries industrielles (12) dans une utilisation différente de l'utilisation dans la centrale de stockage de batterie (10).

10. Procédé selon la revendication 8 ou 9, **caractérisé en ce que** la batterie industrielle (12) ou le groupe de batteries industrielles (12) mise/mis en place dans le stockage de batterie est neuve/neuf et/ou et n'a pas encore parcouru après sa fabrication un nombre prévu de cycles de charge/décharge.

11. Procédé selon l'une des revendications 8 à 10, **caractérisé en ce qu'**une batterie industrielle (12) ou un groupe de batteries industrielles (12) mise/mis en place dans le stockage de batterie parcourt, après la mise en place, un nombre prédéfini de cycles courants de charge et de décharge avec un courant de charge/décharge prédéfini.

12. Procédé selon l'une des revendications 8 à 11, **caractérisé en ce que** la commande détecte un niveau d'électrolyte d'une batterie industrielle (12) et limite les courants de charge et de décharge de la batterie industrielle (12) quand le niveau d'électrolyte passe au-dessous d'une valeur minimale prédéfinie.

13. Procédé selon l'une des revendications 8 à 12, **caractérisé en ce que** la commande détecte une température d'une batterie industrielle (12) et limite les courants de charge et de décharge de la batterie industrielle (12) quand la température passe au-dessus d'une valeur minimale prédéfinie.

14. Procédé selon l'une des revendications 8 à 13, **caractérisé en ce que** la commande règle le courant de charge d'une batterie industrielle (12) ou d'un groupe de batteries industrielles (12) à une valeur prédéfinie pour une charge d'égalisation quand une condition pour une charge d'égalisation apparaît.
